(19) Europäisches Patentamt
European Patent Office
Office européen des brevets

(11) Numéro de publication: **0 495 732 B1**

# (12) FASCICULE DE BREVET EUROPEEN

(45) Date de publication du fascicule du brevet: **15.11.95**

(51) Int. Cl.[6]: **C08G 65/32**, C08L 67/06

(21) Numéro de dépôt: **92420013.2**

(22) Date de dépôt: **10.01.92**

Le dossier contient des informations techniques présentées postérieurement au dépôt de la demande et ne figurant pas dans le présent fascicule.

## (54) Agent dispersant utilisé dans des compositions thermodurcissables, compositions thermodurcissables le contenant et leurs applications.

(30) Priorité: **16.01.91 FR 9100645**

(43) Date de publication de la demande: **22.07.92 Bulletin 92/30**

(45) Mention de la délivrance du brevet: **15.11.95 Bulletin 95/46**

(84) Etats contractants désignés: **BE DE ES GB IT NL SE**

(56) Documents cités:
**US-A- 4 183 843**

**CHEMICAL PATENTS INDEX, BASIC ABSTRACTS JOURNAL Section Ch, Week 8946, 17 Janvier 1990 Derwent Publications Ltd., London, GB; Class A, AN 89-333229/46**

**PATENT ABSTRACTS OF JAPAN vol. 12, no. 110 (C-486)(2957) 8 Avril 1988**

(73) Titulaire: **COATEX S.A.**
**35, rue Ampère**
**F-69730 Genay (FR)**

(72) Inventeur: **Blanchard, Pierre**
**Chemin des Roches,**
**Lotissement Le Vieux Chêne**
**F-01600 Reyrieux (FR)**
Inventeur: **Egraz, Jean-Bernard**
**Impasse Moulin Carron**
**F-69130 Ecully (FR)**
Inventeur: **Ravet, Georges**
**Route Louis Pradel**
**F-69290 Saint-Genis-les-Ollieres (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un nouvel agent dispersant utilisé dans des compositions de moulage thermodurcissables chargées et composées pour l'essentiel d'une résine thermodurcissable de type polyester insaturé, en présence d'un monomère qui peut être ultérieurement copolymérisé avec ce polyester, ou de type alkyde ou acrylique ou phénoplaste, d'une charge minérale pulvérulente et de l'agent dispersant. Ce nouvel agent permet l'obtention de compositions de moulage thermodurcissables hautement chargées, ayant de faibles viscosités sous très faibles cisaillements, c'est-à-dire pas de seuil d'écoulement. Il appartient à la famille des agents dispersants organo-phosphorés.

Lors de la fabrication de pièces moulées et de l'utilisation de compositions à base de résines thermodurcissables du type polyester insaturé, ou alkyde, ou acrylique, ou phénoplaste, selon l'une des techniques connues de moulage de feuilles, "sheet molding compound" (SMC), et de moulage dans la masse, "bulk molding compound" (BMC), il s'avère de plus en plus nécessaire d'augmenter la quantité de charge minérale afin de réduire le coût des objets moulés tout en conservant aux résines leurs propriétés mécaniques, thermiques, diélectriques et esthétiques, ainsi que de chercher à obtenir une viscosité du mélange qui soit la plus faible possible à haut et bas taux de cisaillement. En effet, le fait de ne plus avoir de seuil d'écoulement permet à la résine d'être travaillée facilement à tous les stades du moulage. Dans le but d'introduire des charges dans ces résines, l'utilisation d'agents dispersants du type organo-phosphoré est bien connue.

Ainsi, on peut citer les demandes de brevets JP 61-101527, JP 62-207337, JP 62-235353 qui proposent l'introduction d'organo-phosphorés dans des mélanges contenant au maximum 100 parts de charge pour 100 parts de résine. Pour des concentrations de charge minérale supérieures allant jusqu'à 65%, le brevet US 4,183,843 revendique l'utilisation d'esters polaires de l'acide phosphorique. A faible taux d'utilisation, ces produits diminuent la viscosité des mélanges de carbonate de calcium et/ou d'hydroxyde d'aluminium et/ou de dioxyde de titane et/ou de silice et/ou d'argile avec les résines de type polyester insaturé sous haut cisaillement, mais la viscosité sous très faible cisaillement reste très importante; il y a alors un seuil d'écoulement qui rend la manipulation des formulations difficile. Il a été par ailleurs constaté que la viscosité de la composition thermodurcissable augmente de façon directement proportionnelle à la quantité de ces esters phosphatés polaires utilisée et qu'il y a un effet épaississant.

Par conséquent, un des buts de l'invention est de fournir un nouvel agent dispersant permettant d'obtenir des compositions de moulage thermodurcissables chargées jusqu'à 75% en poids, sans seuil d'écoulement et ayant des viscosités Brookfield abaissées sous haut cisaillement.

Un autre but de l'invention est de fournir un nouvel agent dispersant pouvant être introduit dans des compositions thermodurcissables chargées jusqu'à 75% en poids sans produire d'effet épaississant.

Un autre but de l'invention est de fournir un nouvel agent dispersant pouvant être introduit dans des compositions thermodurcissables hautement chargées sans seuil d'écoulement sans affecter leurs propriétés mécaniques, thermiques, diélectriques et esthétiques.

Un autre but de l'invention est de fournir un nouvel agent dispersant pouvant être introduit dans des compositions thermodurcissables hautement chargées sans seuil d'écoulement, utilisables dans des techniques de moulage en feuilles "sheet molding compound" (SMC) et dans la masse "bulk molding compound" (BMC).

Un autre but de l'invention est d'améliorer l'état de surface (Low Profile) des objets fabriqués à partir des compositions thermodurcissables contenant l'agent dispersant selon l'invention.

Ces buts sont atteints grâce à l'agent selon l'invention de formule générale (I) suivante :

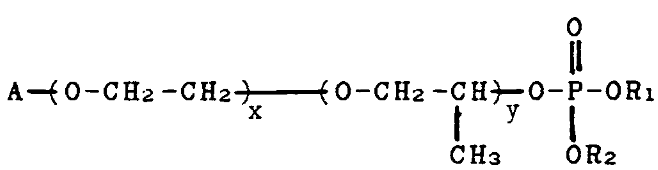

(I)

dans laquelle :

- A est un groupe polyaryle, ramifié ou non,
- x et y sont des nombres entiers allant de 0 à 100 inclus, tels que x + y soit un nombre entier supérieur à 40 et ne dépassant pas 100,

- $R_1$ = H ou

$$B-\!\left(O-CH_2-CH_2\right)_{x_1}\!-\!\left(O-CH_2-\underset{\displaystyle CH_3}{\underset{|}{CH}}\right)_{y_1}\!-$$

avec $x_1$ et $y_1$ étant des nombres entiers allant de 0 à 100 inclus, tels que $x_1 + y_1$ soit un nombre entier ne dépassant pas 100,

- B est un groupe polyaryle, ramifié ou non, ou un radical alkyle, aryle, arylalkyle, alkylaryle, alcanoyle ou amine,
- $R_2$ = H ou

$$E-\!\left(O-CH_2-CH_2\right)_{x_2}\!-\!\left(O-CH_2-\underset{\displaystyle CH_3}{\underset{|}{CH}}\right)_{y_2}\!-$$

avec $x_2$ et $y_2$ étant des nombres entiers allant de 0 à 100 inclus, tels que $x_2 + y_2$ soit un nombre entier ne dépassant pas 100,

- E est un groupe polyaryle, ramifié ou non, ou un radical alkyle, aryle, arylalkyle, alkylaryle, alcanoyle ou amine, et dans laquelle $R_1$ et $R_2$ peuvent être identiques ou différents.

L'agent répondant à cette formule générale (I) contient de préférence un groupe polyaryle A, ramifié ou non, de poids moléculaire compris entre 127 et 2000. Les radicaux B et E qui, lorsqu'ils ne sont pas des groupes polyaryles ramifiés ou non, sont des radicaux alkyle, aryle, arylalkyle, alkylaryle, alcanoyle ou amine, comprennent de préférence jusqu'à 18 atomes de carbone.

A titre d'exemple, on peut citer pour le groupe polyaryle A des radicaux aussi divers que les di(phényl-1-éthyl) phénols communément appelés les distyrylphénols, les tri(phényl-1-éthyl) phénols communément appelés les tristyrylphénols, des oligomères du polystyrène ou des oligomères de copolymère de styrène avec un autre monomère.

On peut également citer à titre d'exemple pour les radicaux B et E, outre les radicaux précités pour A, des groupes tels que lauryle, stéaryle, nonylphénol et autres.

La somme $x + y$ prend de préférence des valeurs de 50 à 60, bornes incluses.

Alors que l'art antérieur propose des dispersants du type ester de phosphate polaire, introduits en quantité allant de 0,05% à 1% en poids par rapport au poids de la charge dans des compositions thermodurcissables chargées, avec une teneur en charge allant jusqu'à 65% du poids total de la charge et de la résine thermodurcissable, l'agent dispersant de formule générale (I) selon l'invention, ajouté en quantité de 0,3% à 5%, et de préférence de 0,5% à 3% en poids par rapport au poids de la charge, est introduit sous agitation dans la résine thermodurcissable, juste avant ou juste après, ou simultanément à l'ajout de la charge pulvérulente présente en quantité allant jusqu'à 75% en poids par rapport au poids total de la résine et de la charge minérale pulvérulente.

Ainsi, la composition thermodurcissable obtenue au moyen de l'agent dispersant selon l'invention et composée d'une résine thermodurcissable, d'une quantité de charges minérales pulvérulentes allant jusqu'à 75% du poids résine plus charge, de l'agent selon l'invention, et d'autres additifs éventuels, ne présente pas de seuil d'écoulement, c'est-à-dire présente une faible viscosité sous très faible taux de cisaillement, et présente une viscosité inférieure ou égale à celle des compositions de l'art antérieur sous des taux de cisaillement plus élevés.

A titre d'exemple, la composition thermodurcissable chargée est composée :

(a) d'une résine thermodurcissable choisie parmi les acryliques, les phénoplastes, les alkydes, les polyesters insaturés produits par la réaction de condensation de l'anhydride maléique en présence ou non d'anhydride phtalique sur un alkylène glycol ou un polyalkylène glycol de bas poids moléculaire dans du styrène susceptible d'être copolymérisé avec la résine polyester, et plus particulièrement choisie parmi les polyesters insaturés,

(b) d'une quantité allant jusqu'à 75% en poids par rapport au poids total de la résine plus la charge minérale pulvérulente, d'une charge minérale pulvérulente choisie parmi les sels et/ou oxydes minéraux tels que le carbonate de calcium naturel ou précipité, le carbonate de magnésium, le carbonate de zinc, la dolomite, le sulfate de calcium, l'hydroxyde d'aluminium, les oxydes métalliques tels que par exemple

l'oxyde de zinc, les oxydes de fer, l'oxyde de titane, la wollastonite, et plus particulièrement choisie parmi le carbonate de calcium, l'hydroxyde d'aluminium, le sulfate de calcium et l'oxyde de titane,

(c) d'une quantité allant de 0,3% à 5% en poids, de préférence de 0,5% à 3% en poids par rapport au poids de la charge, de l'agent dispersant organo-phosphoré selon l'invention,

(d) éventuellement d'autres additifs de type connu choisis notamment parmi les stabilisants thermiques ou photochimiques, les antioxydants, les antiretraits, les antistatiques, les plastifiants, les lubrifiants, les agents de démoulage, les ignifugeants, les fibres et les billes de verre, les épaississants minéraux tels que l'hydroxyde de magnésium.

La composition thermodurcissable contenant l'agent dispersant selon l'invention est caractérisée par sa viscosité Brookfield sous haut et faible cisaillement, mesurée au moyen d'un viscosimètre Brookfield type RVT sous différentes vitesses de rotation du module, tandis que l'agent dispersant selon l'invention est caractérisé par son indice d'acide, déterminé au moyen d'une méthode titrimétrique selon la norme NF T30-402, et par son spectre infra-rouge réalisé au moyen du spectrophotomètre infra-rouge IR 398 avec station de données 3 600 DATA commercialisé par la société PERKIN ELMER.

La portée et l'intérêt de l'invention seront mieux perçus grâce à la description illustrative des exemples qui ne présentent aucun caractère limitatif.

Exemple 1

**Préparation de la composition thermodurcissable**

Dans un pot en verre d'environ 500 ml, muni d'un agitateur de laboratoire GRENIER-CHARVET, on introduit au repos :

- 200 g d'une résine polyester insaturé commercialisée par la société WALTER MADER AG sous la dénomination Cristic 192 LV, et de viscosité Brookfield de 350 mPa.s à 10T/mn, 20° C module 3, et 370 mPa.s à 100T/mn, 20° C module 3, et
- 2 g d'agent dispersant.

On homogénéise alors le mélange pendant 30 secondes au moyen de l'agitateur entraîné à 1 000T/mn.

Puis on ajoute, en 10 minutes sous agitation en augmentant progressivement la vitesse jusqu'à 2 000T/mn, 200 g d'une charge minérale pulvérulente de type hydroxyde d'aluminium, dont 50% des particules sont inférieures à 2,3 $\mu$m et la totalité inférieure à 50 $\mu$m, commercialisée par la société MARTINSWERK sous la dénomination Martinal OL 104-C.

**Mesure de la rhéologie de la composition**

On maintient la composition à 23°C pendant 48 heures puis, après vérification de la température, on mesure avec le même module 6 du viscosimètre Brookfield type RVT les viscosités Brookfield des compositions obtenues sous différents taux de cisaillement à la température de 23°C.

Ce mode opératoire a été effectué pour chacun des dispersants suivants :

Essai 1 : Dispersant de l'art antérieur commercialisé par la société ROHM & HAAS sous le nom de Triton QS-44, d'incide d'acide $I_A$ = 294 mg/g suivant la norme NF T30-402 et dont le spectre infra-rouge est représenté à la figure 1 annexée.

Essai 2 : Dispersant de l'art antérieur commercialisé par la société PHILIP A. HUNT sous le nom de Wayfos M100, d'indice d'acide $I_A$ = 148 mg/g suivant la norme NF T30-402 et dont le spectre infra-rouge est représenté à la figure 1 annexée.

Essai 3 : Dispersant de l'art antérieur commercialisé par la société BYK sous la dénomination BYK W990, d'indice d'acide $I_A$ = 88 mg/g suivant la norme NF T30-402 et dont le spectre infra-rouge est représenté à la figure 1 annexée.

Essai 4 : Dispersant selon l'invention, dénommé produit 4, composé d'un mélange à 41% d'un monoester phosphorique et 59% d'un diester phosphorique de formule générale (I), dans laquelle :

. **Pour le monoester :**

- A =

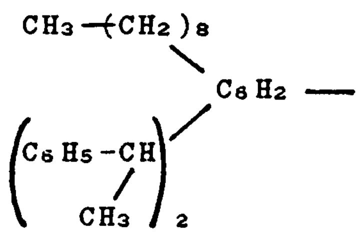

- x = 48
- y = 2
- $R_1 = R_2 = H$

. **Pour le diester :** A =

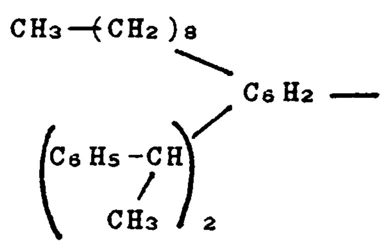

x = 48     y = 2

- $R_1$ =

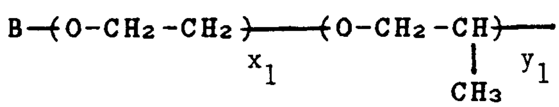

avec

- $x_1 = 48$     $y_1 = 2$
- B = A
- $R_2 = H$

d'indice d'acide $I_A = 56$ mg/g, déterminé selon la norme NF T30-402, et dont le spectre infra-rouge est représenté par la figure 2 annexée.

Essai 5 : Agent dispersant selon l'invention, dénommé produit 5, composé d'un monoester phosphorique de formule générale (I), dans laquelle :

- A =

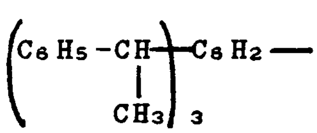

- x = 100
- y = 0
- $R_1 = R_2 = H$

d'indice d'acide $I_A$ = 25 mg/g, déterminé par la méthode selon la norme NF T30-402, et dont le spectre infra-rouge est représenté à la figure 2 annexée.

Résultats

Le tableau I indique les viscosités Brookfield mesurées pour chacune des compositions précitées qui ont toutes :

- la même résine de base, à savoir la Cristic 192 LV,
- la même teneur en Martinal OL-104-C, à savoir 50% en poids par rapport au poids total de la résine et de la charge,
- la même teneur en agent dispersant, à savoir 1% en poids par rapport à la charge,
- une seule variable : la formule chimique de l'agent dispersant.

**TABLEAU I**

| | | ART ANTERIEUR | | | INVENTION | |
|---|---|---|---|---|---|---|
| ESSAI | N° | 1 | 2 | 3 | 4 | 5 |
| Résine | Type | CRISTIC 192 LV | CRISTIC 192 LV | CRISTIC 192 LV | CRISTIC 192 LV | CRISTIC 192 LV |
| Charge | Type | MARTINAL OL 104 C | MARTINAL OL 104 C | MARTINAL OL 104 C | MARTINAL OL 104 C | MARTINAL OL 104 C |
| | Quantité % en poids par rapport charge + résine | 50 % | 50 % | 50 % | 50 % | 50 % |
| Dispersant | Type | TRISTON QS-44 | WAYFOS M100 | BYK W990 | PRODUIT 4 | PRODUIT 5 |
| | Quantité % en poids par rapport charge | 1 % | 1 % | 1 % | 1 % | 1 % |
| Viscosité Brookfield module 6 en mPa.s (cP) | 0,5 T/mn | 180 000 | 182 000 | 162 000 | 10 000 | 14 000 |
| | 1 T/mn | 106 000 | 110 000 | 102 000 | 10 000 | 13 000 |
| | 2,5 T/mn | 54 800 | 56 000 | 54 000 | 8 800 | 10 000 |
| | 5T/mn | 34 000 | 34 000 | 34 000 | 7 200 | 8 200 |
| | 10T/mn | 21 600 | 21 600 | 21 800 | 6 200 | 7 500 |
| | 20T/mn | 14 200 | 14 200 | 14 500 | 5 250 | 6 650 |
| | 50T/mn | 8 540 | 8 400 | 8 800 | 4 300 | 5 940 |
| | 100T/mn | 6 700 | 5 900 | 6 400 | 3 900 | 5 550 |

La lecture du tableau I nous permet de constater que les compositions thermodurcissables contenant l'agent dispersant selon l'invention ont des viscosités Brookfield faibles sous bas taux de cisaillement (0,5 T/mn à 20T/mn) et haut taux de cisaillement (à partir de 50 T/mn). Elles ne présentent donc pas de seuil d'écoulement, contrairement à ce qui a été constaté pour les compositions obtenues au moyen d'agents dispersants de l'art antérieur.

D'autre part, les compositions comprenant l'agent dispersant selon l'invention ont, quel que soit le taux de cisaillement, des viscosités Brookfield plus faibles que celles obtenues avec un agent dispersant de l'art antérieur.

Exemple 2

Dans les mêmes conditions que dans l'exemple 1, on ajoute 400 g de carbonate de calcium naturel dont l'ensemble des particules est inférieur à 50 µm et 50% inférieur à 3,2 µm, commercialisé par la société OMYA S.A. sous le nom de Millicarb, à un mélange composé de 200 g d'une résine de type polyester insaturé commercialisée par la société WALTER MADER AG sous la dénomination Cristic 192 LV, et de 2 g d'agent dispersant.

Puis, au moyen du même mode opératoire que dans l'exemple 1, on mesure les viscosités Brookfield des compositions thermodurcissables obtenues avec les dispersants suivants :

Essai 6 : Dispersant de l'art antérieur commercialisé par la société PHILIP A. HUNT sous le nom de Wayfos M100 déjà utilisé dans l'essai 2.

Essai 7 : Dispersant selon l'invention, dénommé produit 4, déjà utilisé dans l'essai 4.

Essai 8 : Dispersant selon l'invention, dénommé produit 8, composé d'un monoester phosphorique de formule générale (I), dans laquelle :

- A =

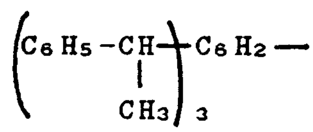

- x = 60
- y = 0
- $R_1 = R_2 = H$

dont l'indice d'acide $I_A$ = 39 mg/g est déterminé par la méthode selon la norme NF T30-402, et dont le spectre infra-rouge est représenté à la figure 2 annexée.

Essai 9 : Dispersant "limite invention", dénommé produit 9, composé d'un monoester phosphorique de formule générale (I), dans laquelle :

- A =

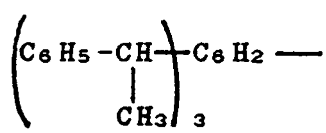

- x = 40
- y = 0
- $R_1 = R_2 = H$

dont l'indice d'acide $I_A$ = 55 mg/g est déterminé par la méthode selon la norme NF T30-402, et dont le spectre infra-rouge est représenté à la figure 3 annexée.

Essai 10 : Dispersant de l'art antérieur, dénommé produit 10, de formule générale :

$$(CH_3(CH_2)_8)_2 - C_6H_3 - (O\text{-}CH_2\text{-}CH_2)_{50} - OP0_3H_2$$

qui n'a pas un radical A polyaryle, pour lequel l'indice d'acide $I_A$ = 55 mg/g est déterminé par la méthode selon la norme NF T30-402, et dont le spectre infra-rouge est représenté à la figure 1 annexée.

Le tableau II indique les viscosités Brookfield mesurées pour chacune des compositions précitées qui ont toutes :

- la même résine de base, à savoir la Cristic 192 LV,
- la même teneur en Millicarb, à savoir 66% en poids par rapport au total de la résine et de la charge,
- la même teneur en agent dispersant, à savoir 0,5% en poids par rapport à la charge,

- une seule variable : la formule chimique de l'agent dispersant.

**TABLEAU II**

| | | ART ANTERIEUR | INVENTION | | LIMITE INVENTION | ART ANTERIEUR |
|---|---|---|---|---|---|---|
| ESSAI | N° | 6 | 7 | 8 | 9 | 10 |
| Résine | Type | CRISTIC 192 LV | CRISTIC 192 LV | CRISTIC 192 LV | CRISTIC 192 LV | CRISTIC 192 LV |
| Charge | Type | MILLICARB | MILLICARB | MILLICARB | MILLICARB | MILLICARB |
| | Quantité % en poids par rapport charge + résine | 66% | 66% | 66% | 66% | 66% |
| Dispersant | Type | WAYFOS M100 | PRODUIT 4 | PRODUIT 8 | PRODUIT 9 | PRODUIT 10 |
| | Quantité % en poids par rapport charge | 0,5 % | 0,5 % | 0,5 % | 0,5 % | 0,5 % |
| Viscosité Brookfield module 6 en mPa.s (cP) | 0,5 T/mn | 88 000 | 4 000 | 4 000 | 3 600 | 4 000 |
| | 1 T/mn | 55 000 | 4 000 | 4 000 | 3 600 | 4 000 |
| | 2,5 T/mn | 31 200 | 4 480 | 4 400 | 4 080 | 4 480 |
| | 5T/mn | 22 000 | 4 800 | 4 700 | 4 560 | 4 960 |
| | 10T/mn | 16 700 | 5 240 | 5 100 | 5 440 | 5 920 |
| | 20T/mn | 13 750 | 6 220 | 6 100 | 7 250 | 7 800 |
| | 50T/mn | 12 100 | 8 670 | 8 600 | 11 300 | 11 720 |
| | 100T/mn | 11 300 | 10 600 | 10 600 | 14500 | 15 320 |

La lecture du tableau II nous permet de constater que les compositions thermodurcissables obtenues au moyen des agents dispersants selon l'invention (essais 7 et 8) sont les seules à simultanément ne posséder aucun seuil d'écoulement et présenter des viscosités minimales pour n'importe quel taux de cisaillement.

En effet, les essais 9 et 10, bien que n'ayant aucun seuil d'écoulement, présentent des viscosités accrues pour des taux de cisaillement élevés, tandis que la composition contenant l'agent dispersant de l'art antérieur (essai 6) a des viscosités élevées pour de faibles taux de cisaillement. Or, la différence entre les essais 7, 8, 9 et 10 provient du dispersant utilisé.

Dans les essais 7 et 8, le dispersant comporte un radical polyaryle et 50 ou 60 unités d'oxyde d'alkylène alors que, dans l'essai 9, tout en comportant un radical polyaryle, le dispersant ne possède seulement que 40 motifs d'oxyde d'éthylène. De même, la différence des dispersants utilisés dans les essais 7 et 10 provient du radical qui n'est pas polyaryle dans l'essai 10, alors que le nombre de motifs d'oxyde d'alkylène est identique.

Ainsi, les dispersants utilisés doivent avoir un motif polyoxyde d'alkylène de plus de 40 unités et un radical polyaryle pour l'obtention de compositions thermodurcissables sans seuil d'écoulement, et avec des viscosités Brookfield minimales à haut taux de cisaillement.

Exemple 3

On prépare des compositions thermodurcissables dans les mêmes conditions, avec les mêmes quantités et les mêmes composés que dans l'exemple 1, à l'exception des dispersants utilisés qui sont :

Essai 11 : Dispersant de l'art antérieur commercialisé par la société PHILIP A. HUNT sous le nom de Wayfos M100 déjà utilisé entre autres dans l'essai 2.

Essai 12 : Dispersant selon l'invention, dénommé produit 4, déjà utilisé dans les essais 4 et 7.

Essai 13 : Dispersant selon l'invention, dénommé produit 8, déjà utilisé dans l'essai 8.

Essai 14 : Dispersant selon l'invention, dénommé produit 5, déjà utilisé dans l'essai 5.

Essai 15 : Dispersant "limite invention", dénommé produit 15, composé d'un mélange de mono et de diester phosphorique de formule générale (I), dans laquelle :

. **Pour le monoester :**

- A =

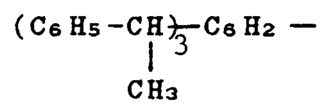

- x = 16
- y = 0
- $R_1$ = $R_2$ = H

. **Pour le diester :**

- A =

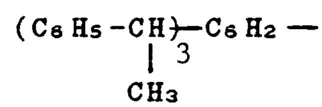

- x = 16
- y = 0
- $R_1$ =

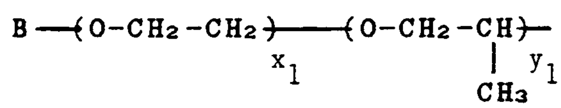

avec
- $x_1$ = 16
- $y_1$ = 0
- B = A
- $R_2$ = H

d'indice d'acide $I_A$ = 60 mg/g, déterminé selon la norme NF T30-402, et dont le spectre infra-rouge est représenté à la figure 3 annexée.

Essai 16 : Dispersant "limite invention", dénommé produit 9, déjà utilisé dans l'essai 9.

Puis, au moyen du même mode opératoire que dans l'exemple 1, on mesure les viscosités des compositions thermodurcissables obtenues et indiquées dans le tableau III.

**TABLEAU III**

| ESSAI | N° | ART ANTERIEUR 11 | INVENTION 12 | INVENTION 13 | INVENTION 14 | LIMITE INVENTION 15 | LIMITE INVENTION 16 |
|---|---|---|---|---|---|---|---|
| Résine | Type | CRISTIC 192 LV | CRISTIC 192 LV | CRISTIC 192 LV | CRISTIC 192 LV | CRISTIC 192 LV | CRISTIC 192 LV |
| Charge | Type | MARTINAL OL 104 C | MARTINAL OL 104 C | MARTINAL OL 104 C | MARTINAL OL 104 C | MARTINAL OL 104 C | MARTINAL OL 104 C |
| | Quantité % en poids par rapport charge + résine | 50 % | 50 % | 50 % | 50 % | 50 % | 50 % |
| Dispersant | Type | WAYFOS M100 | PRODUIT 4 | PRODUIT 8 | PRODUIT 5 | PRODUIT 15 | PRODUIT 9 |
| | Quantité % en poids par rapport charge | 1 % | 1 % | 1 % | 1 % | 1 % | 1 % |
| Viscosité Brookfield module 6 en mPa.s (cP) | 0,5 T/mn | 182 000 | 10 000 | 4 000* | 14 000 | 20 000 | 10 000 |
| | 1 T/mn | 110 000 | 10 000 | 4 000* | 13 000 | 20 000 | 10 000 |
| | 2,5 T/mn | 56 000 | 8 800 | 4 000* | 10 000 | 20 000 | 10 000 |
| | 5T/mn | 34 000 | 7 200 | 4 250* | 8 200 | 15 000 | 8 400 |
| | 10T/mn | 21 600 | 6 200 | 4 000* | 7 500 | 12 500 | 7 200 |
| | 20T/mn | 14 200 | 5 250 | 3 860* | 6 650 | 11 000 | 6 500 |
| | 50T/mn | 8 400 | 4 300 | 3 640* | 5 940 | 11 000 | 6 300 |
| | 100T/mn | 5 900 | 3 900 | 3 540* | 5 550 | 9 700 | 5 900 |

*** Indique que la viscosité a été mesurée avec le module 5 car trop faible pour la mesurer avec le module 6.**

A partir des résultats du tableau III, on a tracé des courbes 1 et 2 représentées respectivement aux figures 4 et 5 annexées. La courbe 1 (Figure 4) représente la variation de la viscosité Brookfield en mPa.s à 0,5 T/mn en fonction du nombre d'oxydes d'alkylène compris dans la formule générale du dispersant utilisé. La courbe 2 (Figure 5) représente la variation de la viscosité Brookfield en mPa.s à 100 T/mn en fonction du nombre d'oxydes d'alkylène compris dans la formule générale du dispersant utilisé. Ce tracé permet de constater que, lorsqu'il y a plus de 40 motifs d'oxyde d'alkylène dans le dispersant utilisé, la viscosité Brookfield de la composition thermodurcissable est très faible pour des taux de cisaillement faibles et minimale pour des taux supérieurs, et que l'intervalle préférentiel du nombre d'oxydes d'alkylène compris dans la formule générale du dispersant selon l'invention se situe entre 50 et 60 motifs.

Exemple 4

Dans les mêmes conditions que dans l'exemple 1, on a augmenté le taux de charge introduite dans le mélange composé de la résine et du dispersant tout en conservant le taux de dispersant constant par

rapport à la charge.

Ainsi, on a effectué les essais 17 à 22 avec, pour tous les essais, 200 g de résine polyester insaturé commercialisée par la société WALTER MADER AG sous le nom de Cristic 192LV, et pour :

Essai 17 :

- 400 g de carbonate de calcium de granulométrie moyenne 3,2 µm, commercialisé par la société OMYA S.A. sous le nom de Millicarb,
- 4 g du dispersant commercialisé par la société PHILIP A. HUNT sous le nom de Wayfos M100.

Essai 18 :

- 500 g du même carbonate de calcium que celui de l'essai précédent,
- 5 g du même dispersant que celui de l'essai précédent.

Essai 19 :

- 600 g du même carbonate de calcium que celui de l'essai précédent,
- 6 g du même dispersant que celui des deux essais précédents.

Essai 20 :

- 400 g du même carbonate de calcium que celui des essais précédents,
- 4 g du dispersant selon l'invention, dénommé produit 8, déjà utilisé dans l'essai 8.

Essai 21 :

- 500 g du même carbonate de calcium que celui des essais précédents,
- 5 g du même dispersant, produit 8.

Essai 22 :

- 600 g du même carbonate de calcium que celui des essais précédents,
- 6 g du même dispersant, produit 8.

Puis, dans les mêmes conditions opératoires que dans l'exemple 1, on a mesuré, à l'aide des modules 6 et 7, les viscosités Brookfield des compositions thermodurcissables ainsi obtenues.

Les résultats sont rassemblés dans le tableau IV qui suit.

**TABLEAU IV**

| | | ART ANTERIEUR | | | INVENTION | | |
|---|---|---|---|---|---|---|---|
| ESSAI | N° | 17 | 18 | 19 | 20 | 21 | 22 |
| Résine | Type | CRISTIC 192 LV | CRISTIC 192 LV | CRISTIC 192 LV | CRISTIC 192 LV | CRISTIC 192 LV | CRISTIC 192 LV |
| Charge | Type | MILLICARB | MILLICARB | MILLICARB | MILLICARB | MILLICARB | MILLICARB |
| | Quantité % en poids par rapport charge + résine | 66,6% | 71,4% | 75,0% | 66,6% | 71,4% | 75,0% |
| Dispersant | Type | WAYFOS M100 | WAYFOS M100 | WAYFOS M100 | PRODUIT 8 | PRODUIT 8 | PRODUIT 8 |
| | Quantité % en poids par rapport charge | 1 % | 1 % | 1 % | 1 % | 1 % | 1 % |
| Viscosité Brookfield module 7 en mPa.s (cP) | 0,5 T/mn | 200 000 | 512 000 | 1 176 000 | 4 000* | 10 000* | 40 000 |
| | 1 T/mn | 124 000 | 296 000 | 704 000 | 5 000* | 10 000* | 40 000 |
| | 2,5 T/mn | 64 000 | 153 000 | 392 000 | 5 600* | 11 200* | 41 600 |
| | 5T/mn | 41 600 | 101 600 | 273 600 | 6 000* | 12 000* | 44 000 |
| | 10T/mn | 28 400 | 70 400 | 204 000 | 6 300* | 13 000* | 53 200 |
| | 20T/mn | 21 000 | 52 000 | 167 600 | 6 800* | 15 300* | 78 400 |
| | 50T/mn | 15 520 | 38 000 | Mesure impossible matériel inadapté | 8 600* | 23 840 | Mesure impossible matériel inadapté |
| | 100T/mn | 13 240 | 32 000 | idem | 11 280 | 32 000 | idem |

*** Indique que la viscosité a été mesurée avec le module 6 car trop faible pour la mesurer avec le module 7.**

La lecture du tableau IV permet de constater que, malgré l'augmentation de la teneur en charge, la composition thermodurcissable selon l'invention conserve sa propriété de ne pas avoir de seuil d'écoulement.

Exemple 5

Dans les mêmes conditions opératoires que dans l'exemple 1, on a préparé des compositions thermodurcissables avec des quantités croissantes d'agent dispersant. Ainsi, pour 200 g de résine polyester

insaturé commercialisée par la société WALTER MADER AG sous le nom de Cristic 192 LV, et pour 400 g de carbonate de calcium naturel commercialisé par la société OMYA S.A. sous le nom de Millicarb, on a utilisé 2 g de dispersant pour les essais 23 et 24, 4 g pour les essais 25 et 26, 8 g pour les essais 27 et 28 et 20 g pour les essais 29 et 30.

Puis, dans les mêmes conditions opératoires que dans l'exemple 1, on a mesuré, à l'aide des modules 5, 6 ou 7, les viscosités Brookfield des compositions thermodurcissables ainsi obtenues. Le tableau V suivant, dans lequel figurent ces viscosités, nous permet de constater que l'ajout de quantités croissantes d'agent dispersant selon l'invention, dans une proportion allant jusqu'à 5% en poids, et préférentiellement 3% en poids par rapport à la charge, permet un abaissement de la viscosité Brookfield de la composition thermodurcissable, alors que les dispersants de l'art antérieur ont un effet épaississant sous faible taux de cisaillement (jusqu'à 20T/mn).

Cette faculté d'abaissement de la viscosité Brookfield permet de choisir la viscosité désirée pour la composition en ajustant la quantité de dispersant à introduire.

**TABLEAU V**

| ESSAI | N° | 23 | 24 | 25 | 26 | 27 | 28 | 29 | 30 |
|---|---|---|---|---|---|---|---|---|---|
| Résine | Type | Cristic 192 LV | Cristic 192 LV | Cristic 192 LV | Cristic 192 LV | Cristic 192 LV | Cristic 192 LV | Cristic 192 LV | Cristic 192 LV |
| Charge | Type | Millicarb | Millicarb | Millicarb | Millicarb | Millicarb | Millicarb | Millicarb | Millicarb |
| | Quantité % en poids par rapport charge + résine | 66 % | 66 % | 66 % | 66 % | 66 % | 66 % | 66 % | 66 % |
| Dispersant | Type | WAYFOS M100 | PRODUIT 8 | WAYFOS M100 | PRODUIT 8 | WAYFOS M100 | PRODUIT 8 | WAYFOS M100 | PRODUIT 8 |
| | Quantité % en poids par rapport charge | 0,5 % | 0,5 % | 1 % | 1 % | 2 % | 2 % | 5 % | 5% |
| Viscosité Brookfield module 6 en mPa s (cP) | 0,5 T/mn | 120 000 | 5 600* | 218 000 | 5 600* | 314 000 | 5 600* | 524 000 | 8 000* |
| | 1 T/mn | 72 000 | 6 000* | 130 000 | 6 400* | 178 000 | 5 600* | 294 000 | 8 000* |
| | 2,5 T/mn | 40 400 | 6 400* | 69 600 | 6 400* | 90 000 | 5 800* | 144 000 | 8 500* |
| | 5T/mn | 27 600 | 7 000* | 46 400 | 7 000* | 56 200 | 6 000* | 86 800 | 8 600* |
| | 10T/mn | 23 500 | 8 200* | 32 600 | 7 640* | 37 400 | 6 100* | 58 400 | 8 600* |
| | 20T/mn | 18 700 | 10 600* | 24 800 | 8 500* | 26 500 | 6 400* | 54 600** | 9 500 |
| | 50T/mn | 17 500** | 14 600** | 21 200** | 12 100** | 20 200** | 7 100* | 32 800** | 9 700 |
| | 100T/mn | 16 800** | 16 800** | 17 600** | 13 200** | 15 800** | 8 200 | 24 000** | 10 600** |

* indique que les mesures ont été effectuées avec le module 5 car trop faibles pour le module 6.

** indique que les mesures ont été effectuées avec le module 7 car trop élevées pour le module 6.

Exemple 6

Dans les mêmes conditions opératoires que dans l'exemple 1, on a réalisé des compositions thermodurcissables avec plusieurs types de résine. On a ainsi effectué :

- les essais 31 à 33 avec 200 g de résine acrylique, commercialisée par la société I.C.I. sous la dénomination Modar 826 HT, de viscosité Brookfield à 10T/mn de 220 mPa.s (module 4) et à 100T/mn de 250 mPa.s (module 4) à température ambiante, 400 g de carbonate de calcium naturel commercialisé par la société OMYA S.A. sous le nom de Millicarb, et 4 g de dispersant,
- les essais 34 à 36 avec 200 g d'une résine polyester insaturé de plus haut poids moléculaire, et de viscosité Brookfield de 2 880 mPa.s à 10T/mn (module 5) et 2 940 mPa.s à 100T/mn (module 5) à température ambiante, 300 g du même carbonate de calcium que précédemment, et 4 g de dispersant,
- les essais 37 et 38 avec 200 g d'une résine polyester insaturé, distribuée par la société STRAND GLASS sous le nom de Cristic 191 LV, dont la viscosité Brookfield à 10T/mn est de 700 mPa.s (module 3) et à 100T/mn de 250 mPa.s (module 3) à température ambiante, 400 g du même carbonate de calcium que précédemment, et 8 g de dispersant.

Ces compositions thermodurcissables réalisées, on a utilisé le même mode opératoire que celui de l'exemple 1 pour mesurer leurs viscosités Brookfield, qui sont indiquées dans le tableau VI qui suit.

**TABLEAU VI**

| ESSAI | N° | 31 | 32 | 33 | 34 | 35 | 36 | 37 | 38 |
|---|---|---|---|---|---|---|---|---|---|
| Résine | Type | Modar 826 HT | Modar 826 HT | Modar 826 HT | Polyester haut poids moléculaire | Polyester haut poids moléculaire | Polyester haut poids moléculaire | Cristic 191 LV | Cristic 191 LV |
| Charge | Type | Millicarb | Millicarb | Millicarb | Millicarb | Millicarb | Millicarb | Millicarb | Millicarb |
| | Quantité % en poids par rapport charge + résine | 66 % | 66 % | 66 % | 60 % | 60 % | 60 % | 66 % | 66 % |
| Dispersant | Type | WAYFOS M100 | PRODUIT 4 | PRODUIT 8 | WAYFOS M100 | TRITON QS44 | PRODUIT 8 | WAYFOS M100 | PRODUIT 8 |
| | Quantité % en poids par rapport charge | 1 % | 1 % | 1 % | 1,3 % | 1,3 % | 1,3 % | 2% | 2% |
| Viscosité Brookfield module 6 en mPa.s (cP) | 0,5 T/mn | 110 000 | 10 000 | 20 000 | 432 000* | 424 000* | 32 000* | 400 000* | 10 000 |
| | 1 T/mn | 65 000 | 8 000 | 16 000 | 260 000* | 244 000* | 32 000* | 228 000* | 13 000 |
| | 2,5 T/mn | 34 000 | 6 000 | 10 800 | 144 000* | 134 400* | 32 000* | 122 000* | 13 200 |
| | 5T/mn | 22 000 | 5 400 | 8 800 | 96 000* | 92 000* | 28 800* | 81 600* | 13 600 |
| | 10T/mn | 14 800 | 4 900 | 7 500 | 68 000* | 66 400* | 28 800* | 56 800* | 14 200 |
| | 20T/mn | 10 500 | 4 550 | 6 550 | 51 000* | 52 000* | 29 200* | 41 400* | 15 400 |
| | 50T/mn | 7 320 | 4 280 | 6 000 | 36 560* | 40 960* | 30 240* | 30 100* | 18 500 |
| | 100T/mn | 6 020 | 4 250 | 5 870 | 30 000* | 34 220* | 30 000* | 25 100* | 23 600* |

*** indique que les mesures ont été effectuées avec le module 7 car trop élevées pour le module 6**

La lecture du tableau VI permet de constater que les dispersants selon l'invention sont efficaces pour divers types de résine.

Exemple 7

Dans les mêmes conditions opératoires que dans l'exemple 1, on a réalisé des compositions thermodurcissables avec deux autres types de charge.

On a ainsi effectué :

- l'essai 39 avec 300 g d'une résine polyester insaturé, commercialisée par la société WALTER MADER AG sous la dénomination Cristic 192 LV, 300 g de dioxyde de titane commercialisée par la société THANN et MULHOUSE sous la dénomination AT1, et 3 g d'agent dispersant selon l'invention, dénommé produit 8.
- l'essai 40 est effectué avec les mêmes quantités et natures de résine et de charge que l'essai 39, mais sans agent dispersant.

- l'essai 41 est effectué avec 300 g de la même résine polyester insaturé que dans les essais 39 et 40, et 400 g de sulfate de calcium hydraté, de granulométrie moyenne de l'ordre de 15 micromètres, et 2 g du même agent dispersant selon l'invention que dans l'essai 39, dénommé produit 8.
- l'essai 42 est effectué avec les mêmes quantités et natures de résine et de charge que l'essai 41, mais sans agent dispersant.

Ces compositions thermodurcissables réalisées, on a utilisé le même mode opératoire que celui de l'exemple 1 pour mesurer leurs viscosités Brookfield, qui sont indiquées dans le tableau VII ci-après.

**TABLEAU VII**

| ESSAI | N° | 39 | 40 | 41 | 42 |
|---|---|---|---|---|---|
| Résine | Type | CRISTIC 192 LV | CRISTIC 192 LV | CRISTIC 192 LV | CRISTIC 192 LV |
| Charge | Type | $TiO_2$ AT1 | $TiO_2$ AT1 | Sulfate de calcium | Sulfate de calcium |
| | Quantité % en poids par rapport charge + résine | 50 % | 50 % | 66 % | 66 % |
| Dispersant | Type | Produit 8 | | Produit 8 | |
| | Quantité % en poids par rapport charge | 1 % | 0 % | 0,5 % | 0 % |
| Viscosité Brookfield module 6 en mPa.s (cP) | 0,5 T/mn | 10 000 | 32 000 | 30 000 | 200 000 |
| | 1 T/mn | 8 000 | 25 000 | 40 000 | 130 000 |
| | 2,5 T/mn | 6 800 | 22 800 | 53 000 | 90 000 |
| | 5T/mn | 6 000 | 20 800 | 57 000 | 74 000 |
| | 10T/mn | 5 200 | 18 700 | 54 600 | 64 000 |
| | 20T/mn | 4 750 | 16 800 | 46 600 | 52 000* |
| | 50T/mn | 4 200 | 13 200 | 40 400 | 52 000* |
| | 100T/mn | 3 900 | 9 800* | 29 200 | Mesure impossible matériel inadapté |

*** indique que les mesures ont été effectuées avec le module 7 car trop élevées pour le module 6.**

La lecture du tableau VII nous permet de constater que l'agent dispersant selon l'invention est également efficace pour des charges minérales pulvérulentes autres que le carbonate de calcium et l'hydroxyde d'aluminium, et telles qu'entre autres l'oxyde de titane et le sulfate de calcium.

## Revendications

1. Agent dispersant de charges minérales dans les résines thermodurcissables, de type organo-phosphoré, caractérisé en ce qu'il répond à la formule générale :

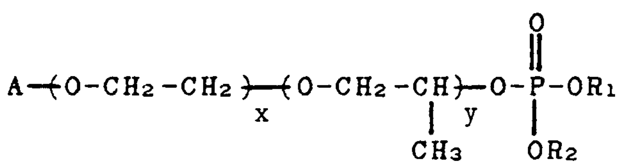

(I)

dans laquelle :
- A est un groupe polyaryle, ramifié ou non,
- x et y sont des nombres entiers allant de 0 à 100 inclus, tels que x + y soit un nombre entier supérieur à 40 et ne dépassant pas 100,
- $R_1$ = H ou

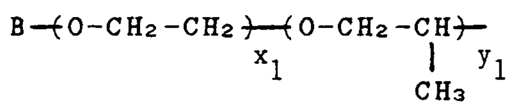

avec $x_1$ et $y_1$ étant des nombres entiers allant de 0 à 100 inclus, tels que $x_1 + y_1$ soit un nombre entier ne dépassant pas 100,
- B est un groupe polyaryle, ramifié ou non, ou un radical alkyle, aryle, arylalkyle, alkylaryle, alcanoyle, ou amine.
- $R_2$ = H ou

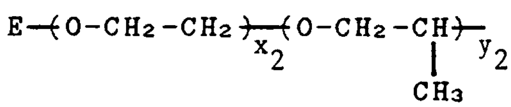

avec $x_2$ et $y_2$ étant des nombres entiers allant de 0 à 100 inclus, tels que $x_2 + y_2$ soit un nombre entier ne dépassant pas 100,
- E est un groupe polyaryle, ramifié ou non, ou un radical alkyle, aryle, arylalkyle, alkylaryle, alcanoyle, amine, et dans laquelle $R_1$ et $R_2$ peuvent être identiques ou différents.

2. Agent dispersant selon la revendication 1, caractérisé en ce que le groupe polyaryle A a un poids moléculaire compris entre 127 et 2 000.

3. Agent dispersant selon la revendication 1 ou 2, caractérisé en ce que le nombre d'oxydes d'alkylène x + y prend des valeurs de 50 à 60, bornes incluses.

4. Composition thermodurcissable, comprenant :
   (a) une résine thermodurcissable,
   (b) une charge minérale pulvérulente en quantité allant jusqu'à 75% en poids par rapport au poids total de la résine plus de la charge,
   (c) l'agent dispersant selon l'une quelconque des revendications 1 à 3, en quantité allant de 0,3 à 5% en poids par rapport au poids de la charge,
   (d) éventuellement, d'autres additifs choisis parmi les stabilisants thermiques ou photochimiques, les antioxydants, les antiretraits, les antistatiques, les plastifiants, les lubrifiants, les agents de démoulage, les ignifugeants, les fibres et les billes de verre, les épaississants minéraux.

5. Composition thermodurcissable selon la revendication 4, caractérisée en ce que la résine thermodurcissable est de type acrylique ou polyester insaturé.

6. Composition thermodurcissable selon la revendication 4 ou 5, caractérisée en ce que la charge minérale pulvérulente est du carbonate de calcium naturel ou précipité, de l'hydroxyde d'aluminium, du sulfate de calcium, de l'oxyde de titane, ou un de leurs mélanges.

7. Composition thermodurcissable selon l'une quelconque des revendications 4 à 6, caractérisée en ce que la quantité d'agent dispersant est de 0,5 à 3% en poids par rapport au poids de la charge.

8. Application de la composition thermodurcissable selon l'une des revendications 4 à 7 aux techniques de moulage dans la masse "bulk molding compound" (BMC) et de moulage en feuilles "sheet molding compound" (SMC).

## Claims

1. Dispersing agent for mineral filler in thermosetting resins, of an organo-phosphorated type, characterised by the fact that it meets the following general formula:

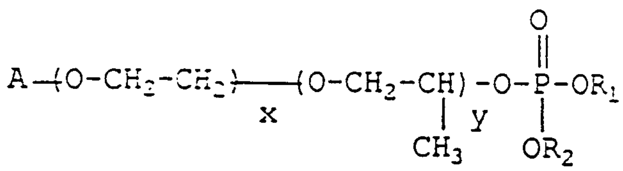

(I)

in which:
- A is a polyaryl group, branched or not;
- x and y are integers ranging from 0 to 100 inclusive, such that x + y is an integer greater than 40 and not greater than 100;
- $R_1$ = H OR

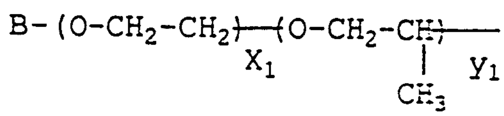

with $X_1$ and $y_1$ being integers ranging from 0 to 100 inclusive, such that $X_1 + y_1$ is an integer not greater than 100;
- B is a polyaryl group, branched or not, or an alkyl, aryl, arylalkyl, alkylaryl, alkanoyl or amine radical.
- $R_2$ = H OR

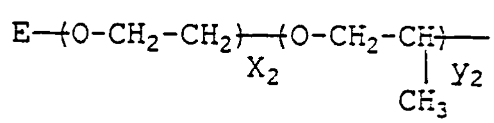

with $x_2$ and $y_2$ being integers ranging from 0 to 100 inclusive, such that $x_2 + y_2$ is an integer not greater than 100;
- E is a polyaryl group, branched or not, or an alkyl, aryl, arylalkyl, alkylaryl, alkanoyl or amine radical, in which $R_1$ and $R_2$ may be identical or different.

2. Dispersing agent according to claim 1, characterised by the fact that the polyaryl group A has a molecular weight between 127 and 2000.

3. Dispersing agent according to claim 1 or 2, characterised by the fact that the number of alkylene oxides x + y takes values from 50 to 60 inclusive.

4. Thermosetting substance containing:
(a) a thermosetting resin;
(b) a powdered mineral filler in a quantity of up to 75% by weight in relation to the total weight of resin plus filler;
(c the dispersing agent according to any of claims 1 to 3, at a rate of 0.3 to 5% by weight in relation to the weight of the filler;
(d) if required, other additives chosen from thermal or photochemical stabilisers, antioxidants, anti-shrinkage agents, antistatics, plastifiers, lubricants, demoulding agents, flame retardants, glass fibres or pellets, and mineral thickeners.

5. Thermosetting substance according to claim 4, characterised by the fact that the thermosetting resin is an acrylic or an unsaturated polyester.

6. Thermosetting substance according to claim 4 or 5, characterised by the fact that the powdered mineral filler is natural or precipitated calcium carbonate, aluminium hydroxide, calcium sulphate, titanium oxide or a mixture of any of these.

7. Thermosetting substance according to any of claims 4 to 6, characterised by the fact that the quantity of dispersing agent is 0.5 to 3% by weight in relation to the weight of the filler;

8. Application of the thermosetting substance according to any of claims 4 to 7 to bulk moulding compound (BMC) and sheet moulding compound (SMC) techniques.

**Patentansprüche**

1. Mittel vom organo-phosphorierten Typ zum Dispergieren von mineralischen Füllstoffen in duroplastischen Harzen, dadurch gekennzeichnet, daß es der allgemeinen Formel entspricht:

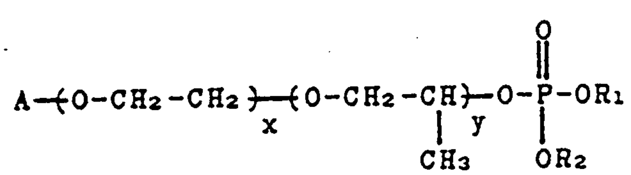

(I)

in der:
- A eine unverzweigte oder verzweigte Polyarylgruppe ist,
- x und y ganze Zahlen von 0 bis 100 einschließlich sind, derart, daß x + y eine ganze Zahl oberhalb von 40 und 100 nicht überschreitend ist,
- $R_1$ = H oder

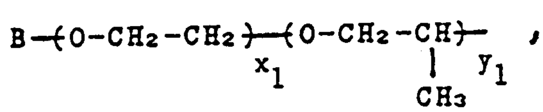

wobei $x_1$ und $y_1$ ganze Zahlen von 0 bis 100 einschließlich sind, derart, daß $x_1$ + $y_1$ eine ganze Zahl ist, die 100 nicht überschreitet,
- B eine verzweigte oder unverzweigte Polyarylgruppe oder ein Alkyl-, Aryl-, Arylalkyl-, Alkylaryl-, Alkanoyl- oder Aminrest ist,

- $R_2$ = H oder

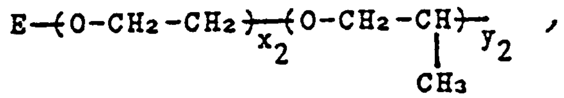

wobei $x_2$ und $y_2$ ganze Zahlen von 0 bis 100 einschließlich sind, derart, daß $x_2 + y_2$ eine ganze Zahl ist, die 100 nicht überschreitet,

- E eine verzweigte oder unverzweigte Polyarylgruppe oder ein Alkyl-, Aryl-, Arylalkyl-, Alkylaryl-, Alkanoyl- oder Aminrest ist,

und in der $R_1$ und $R_2$ gleich oder verschieden sein können.

**2.** Mittel zum Dispergieren nach Anspruch 1, dadurch gekennzeichnet, daß die Polyarylgruppe A ein Molekulargewicht zwischen 127 und 2000 eingeschlossen aufweist.

**3.** Mittel zum Dispergieren nach Anspruch 1 oder 2, dadurch gekennzeichnet, daß die Zahl der Alkylenoxide $x + y$ die Werte 50 bis 60, Grenzen eingeschlossen, annimmt.

**4.** Duroplastische Zusammensetzung, umfassend:
(a) ein duroplastisches Harz,
(b) einen pulverförmigen mineralischen Füllstoff in einer Menge bis zu 75 Gew.-%, bezogen auf das Gesamtgewicht von Harz plus Füllstoff,
(c) das Mittel zum Dispergieren nach irgendeinem der Ansprüche 1 bis 3 in einer Menge von 0,3 bis 5 Gew.-%, bezogen auf das Gewicht des Füllstoffs,
(d) gegebenenfalls andere Additive, die ausgewählt sind aus thermischen oder photochemischen Stabilisatoren, Antioxidantien, Antischrumpfungsmitteln, antistatischen Mitteln, Weichmachern, Gleitmitteln, Formtrennmitteln, Flammschutzmitteln, Glasfasern und -kugeln, mineralischen Verdickungsmitteln.

**5.** Duroplastische Zusammensetzung nach Anspruch 4, dadurch gekennzeichnet, daß das duroplastische Harz vom Acryl- oder oder ungesättigten Polyester-Typ ist.

**6.** Duroplastische Zusammensetzung nach Anspruch 4 oder 5, dadurch gekennzeichnet, daß es sich bei dem pulverförmigen mineralischen Füllstoff um natürliches oder gefälltes Calciumcarbonat, Aluminiumhydroxid, Calciumsulfat, Titanoxid oder eine von deren Mischungen handelt.

**7.** Duroplastische Zusammensetzung nach irgendeinem der Ansprüche 4 bis 6, dadurch gekennzeichnet, daß die Menge des Mittels zum Dispergieren 0,5 bis 3 Gew.-%, bezogen auf das Gewicht des Füllstoffs, beträgt.

**8.** Verwendung der duroplastischen Zusammensetzung nach irgendeinem der Ansprüche 4 bis 7 bei Verfahren des Formens in der Masse "bulk molding compound" (BMC) und des Formens zu Folien "sheet molding compound" (SMC).

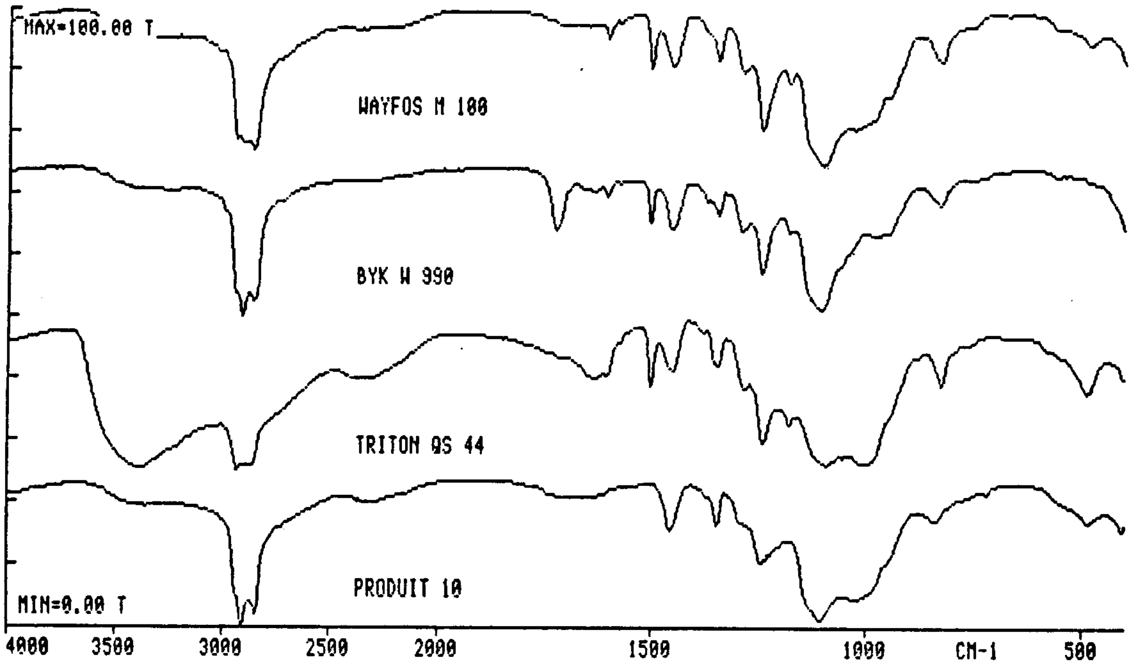
MAX=100.00 T
WAYFOS M 100
BYK W 990
TRITON QS 44
PRODUIT 10
MIN=0.00 T
4000
3500
3000
2500
2000
1500
1000
CM-1
500

Fig. 1

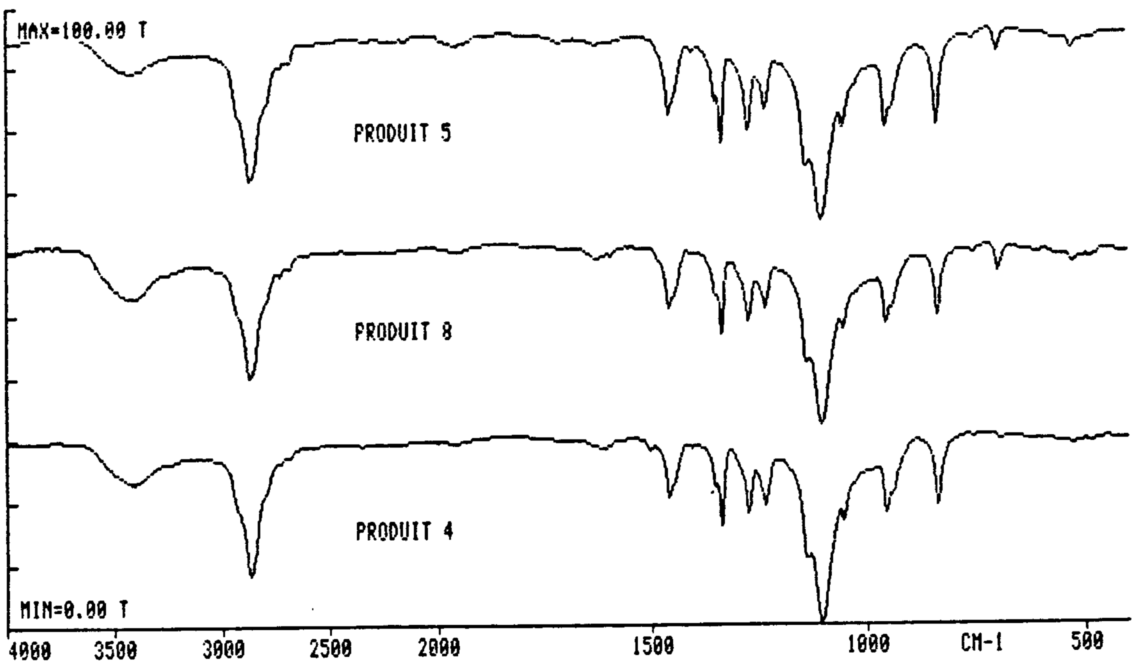
MAX=100.00 T
PRODUIT 5
PRODUIT 8
PRODUIT 4
MIN=0.00 T
4000
3500
3000
2500
2000
1500
1000
CM-1
500

Fig. 2

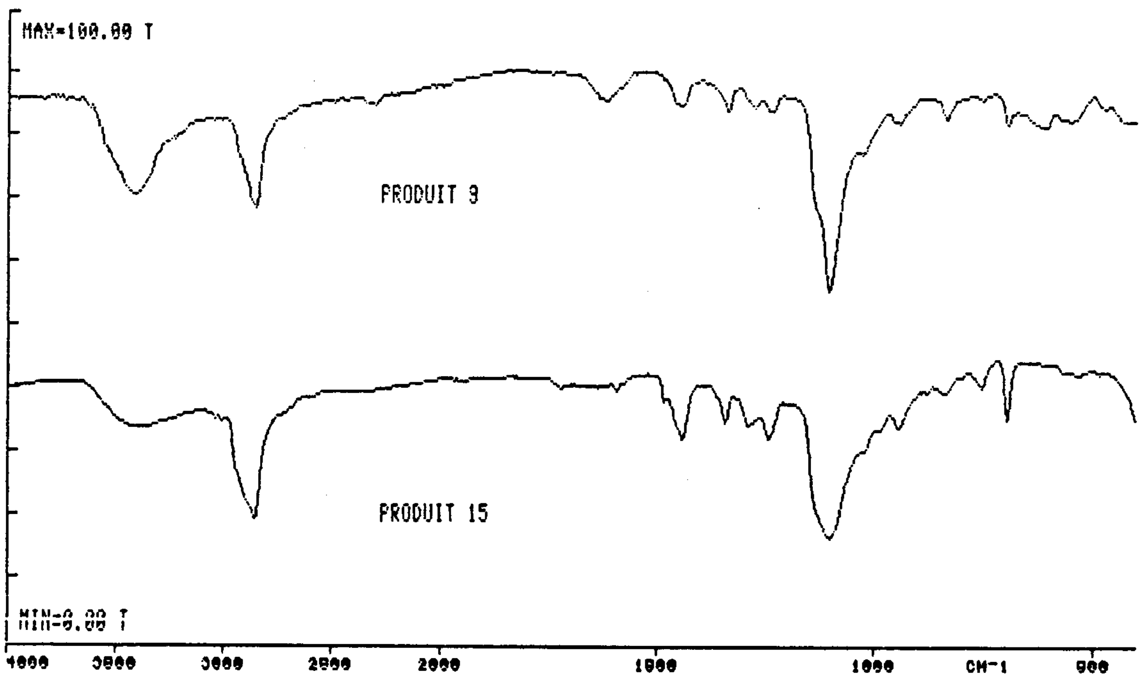
MAX=100.00 T
PRODUIT 9
PRODUIT 15
MIN=0.00 T
4000
3500
3000
2500
2000
1500
1000
CM-1
500

Fig. 3

Fig. 4

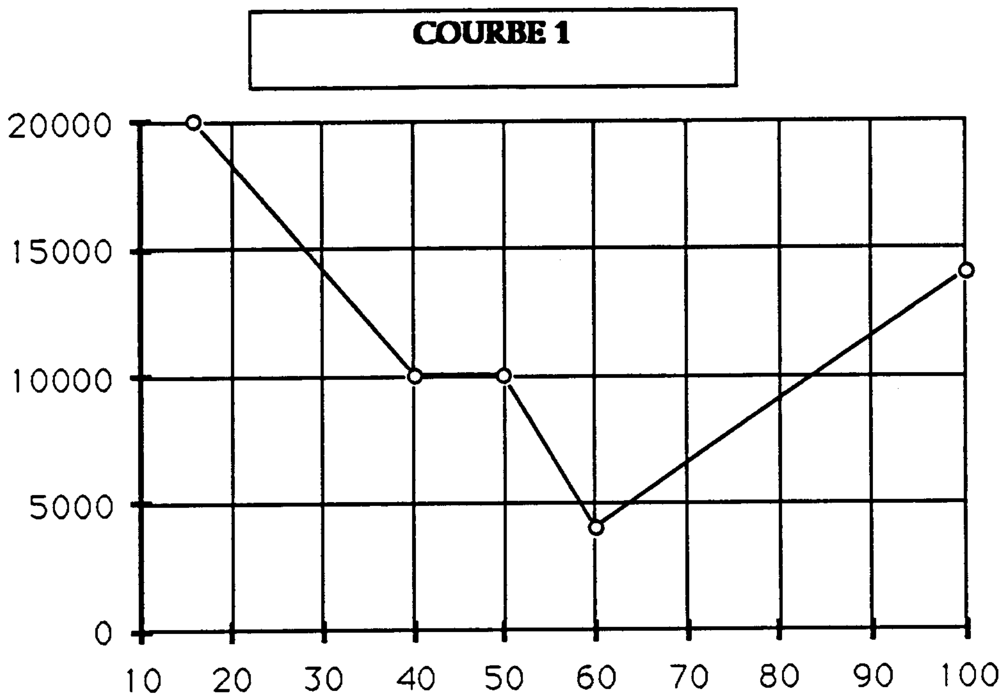
COURBE 1
20000
15000
10000
5000
0
10
20
30
40
50
60
70
80
90
100

Fig. 5

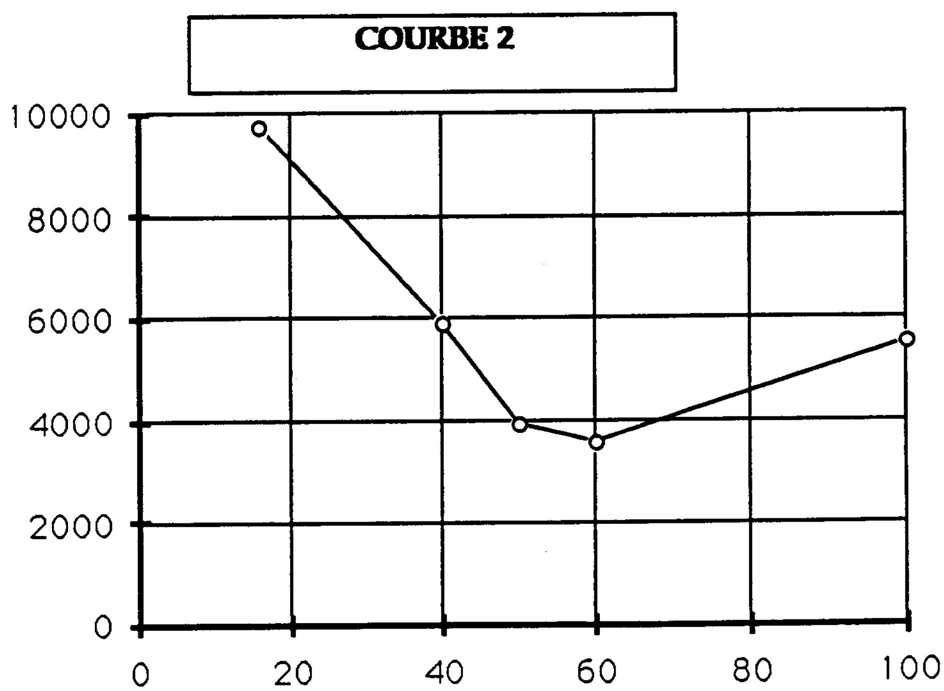
COURBE 2
10000
8000
6000
4000
2000
0
0
20
40
60
80
100